# FASCICULE DE BREVET EUROPEEN

(11) **EP 1 306 253 B1**
(45) Date de publication et mention de la délivrance du brevet: **20.04.2005**
(21) Numéro de dépôt: 02292616.6
(22) Date de dépôt: 22.10.2002
(51) Int. Cl.: B60J 5/04, E05F 11/38

(54) **Lève-vitre**
Fensterheber
Window-lifter

(30) Priorité: 24.10.2001 FR 0113737
(43) Date de publication de la demande: 02.05.2003
(73) Titulaire: ArvinMeritor Light Vehicle Systems-France, 45600 Sully sur Loire (FR)
(72) Inventeur: Mercier, Jacky, 45460 Bonnee (FR); De Vries, Pascal, 45640 Sandillon (FR)
(74) Mandataire: Cabinet Hirsch

(56) Documents cités:
- DE-A- 19 943 338
- US-A- 5 735 041
- US-A- 5 946 858

## Description

La présente invention se rapporte à un lève-vitre, comportant un support et des rails.

Les portes de véhicule sont équipées d'un nombre croissant de périphériques actionnés électriquement, tels que les actionneurs de la fermeture centralisée des portes et des vitres électriques, la lampe de courtoisie, les haut-parleurs, les rétroviseurs, ... L'accroissement du nombre de périphériques engendre un accroissement de l'utilisation de fils électriques d'alimentation des périphériques. Surgit alors le problème du positionnement et du maintien de ces fils au sein de la porte.

Il a été proposé de fixer les fils sur la tôle formant la porte. Pour cela, une projection depuis la tôle peut être aménagée à l'intérieur de la porte afin d'y monter un moyen de fixation des fils. Cette solution présente l'inconvénient de compliquer la fabrication de la tôle de la porte. Il a également été proposé de monter les moyens de fixation des fils dans des trous pratiqués sur des parois d'étanchéité intermédiaires à l'intérieur de la porte, comme sur le véhicule vendu par la société Renault sous la marque Renault Laguna. Cette solution présente l'inconvénient d'être préjudiciable pour l'étanchéité au sein de la porte.

En outre, le document US-A-5 946 858 décrit un support selon le préambule de la revendication 1.

Pour résoudre le problème de la fixation des fils dans la porte, l'invention propose un support de rails de lève-vitre comprenant au moins un clip de fixation d'au moins un fil, le clip étant monobloc avec le support. Le support comporte en outre deux pattes articulée par une de leurs extremités sur le support une des pattes ayant son extrémité libre en contact avec l'autre patte.

Une des pattes peut avoir une première concavité orientée vers le support et éventuellement, une deuxième concavité orientée dans la direction contraire à la première concavité.

Typiquement, les pattes ont leur extrémité libre en contact.

Le support peut avoir une section transversale en forme de conduit de guidage. Le clip est avantageusement à l'extérieur du conduit de guidage.

L'invention concerne également un lève-vitre comprenant : un support tel que précédemment décrit et deux rails reliés entre eux par le support. Le support peut maintenir les rails parallèles entre eux. Avantageusement, l'extrémité inférieure de chacun des rails est reliée par le support à l'extrémité supérieure de l'autre rail. Le lève-vitre peut en outre comprendre un câble coulissant dans les rails et dans le support.

L'invention se rapporte également à une porte de véhicule automobile comprenant un lève-vitre tel que précédemment décrit. La porte peut comprendre des périphériques dont les fils électriques sont fixés par le clip.

L'invention concerne aussi un procédé de fabrication d'un support tel que précédemment décrit et comprenant une étape de moulage du support.

Le support selon l'invention permet d'obtenir un moyen de fixation de fils dans la porte qui soit simple de fabrication et peu onéreux. Ce moyen a l'avantage de fixer les fils sans que ceux-ci se libèrent d'eux-mêmes.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue schématique d'un lève-vitre ;
- figure 2, une section d'un support de rails de lève-vitre n'appartenant pas à l'invention;
- figure 3, une section d'un support selon un mode de réalisation de l'invention.

Face au nombre croissant de fils dans la porte, l'invention propose de fixer les fils sur une pièce fixe rapportée à la porte. L'invention propose plus particulièrement que les fils soient fixés sur un support de rails de lève-vitre, par un moyen de fixation intégré au support. Pour cela, l'invention se rapporte à un support de rails de lève-vitre comprenant au moins un clip de fixation d'au moins un fil, le clip étant monobloc avec le support. Dans la description qui suit, on entend par « clip » un moyen de fixation par pince formant ressort.

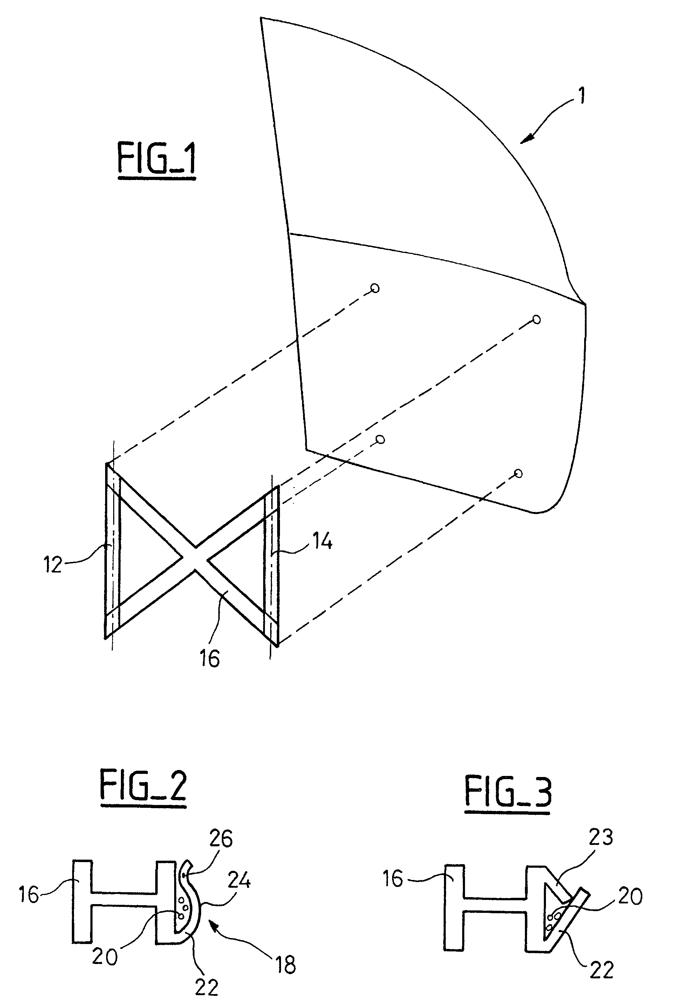

L'invention se rapporte à un support de rails dans un lève-vitre de type « banjo ». La figure 1 montre une vue schématique d'un lève-vitre 10 de ce type. Le lève-vitre 10 comporte deux rails 12, 14 verticaux et parallèles entre eux. Un câble (non représenté) est disposé en X entre les rails 12, 14 et coulisse sur ceux-ci. Le lève-vitre 10 comporte en outre un support 16 entre les rails 12, 14. Les rails 12, 14 sont reliés entre eux par le support 16. Le support 16 permet de maintenir les rails 12, 14 dans une position verticale et de manière parallèle entre eux. Le support 16 a avantageusement une forme en X. Il relie l'extrémité supérieure de chacun des rails 12, 14 avec l'extrémité inférieure de l'autre rail 12, 14. Il offre ainsi une rigidité suffisante au lève-vitre pour que celui-ci soit rapporté de manière modulaire sur une porte, de véhicule automobile par exemple. Le support 16 permet également de reprendre les efforts provoqués par la tension du câble lors du fonctionnement du lève-vitre. Avantageusement, le support 16 présente une section transversale en forme de conduit de guidage, en particulier de guidage de câble. Typiquement, le support 16 est d'une structure tubulaire. Il permet alors non seulement de guider le câble mais également de le protéger contre les agressions du transport ou du montage.

Le support est en matière plastique, comme par exemple le polyamide chargé en fibre de verre suffisamment rigide pour constituer le lève-vitre et suffisamment souple pour constituer le clip.

La figure 2 montre un support 16 de rails de lève-vitre n'appartenant pas à l'invention. Sur la figure, le support 16 est représenté non limitativement avec une section en H ; le support peut aussi avoir une section en U ou tubulaire. Le support 16 comprend au moins un clip 18 de fixation d'au moins un fil 20, le clip 18 étant monobloc avec le support 16. Le clip 18 est un moyen de fixation qui pince le fil 20 contre le support 16 et le maintient en position. Le clip forme un ressort, en ce sens qu'il est déformé élastiquement pour que le fil puisse être introduit dans le clip. Lorsque le clip 18 est relâché, il tend à retrouver sa position de repos en pinçant le fil. Par ailleurs, le clip 18 est monobloc avec le support 16, en ce sens qu'il est intégré au support 16. Le clip et le support ne forment qu'une seule pièce. Ceci permet de s'assurer de la présence du clip sur le support; en effet, lorsque le clip est une pièce supplémentaire rapportée sur le support, il pourrait être oublié lors du montage du support sur la porte.

Ce support permet de maintenir en position le fil sans endommager ce dernier.

Le clip 18 permet de bloquer plusieurs fils 20 le long du support 16. Les fils 20 peuvent être des fils électriques d'alimentation des périphériques installés sur la porte du véhicule. Il s'agit, par exemple, de fils d'alimentation de la lampe de courtoisie, de servomoteurs actionnant les rétroviseurs, les vitres électriques, la fermeture centralisée des portes,... Les fils 20 peuvent aussi être des tuyaux de passage d'air (comme sur le véhicule vendu par la société Volkswagen sous la marque Passat) ou de fluides tels que des fluides de commandes hydrauliques.

Le support 16 peut être obtenu par un procédé de moulage. Le procédé comporte une étape au cours de laquelle le clip est moulé avec le support 16. L'avantage est que le moulage du clip est concomitant avec le moulage du support et ne nécessite pas d'étape supplémentaire de fabrication. La fabrication du support est alors simple et peu onéreuse.

Le clip 18 comporte au moins une patte 22 articulée par une de ses extrémités sur le support 16. La patte est un moyen étroit et allongé. Elle peut être plate ou présenter une épaisseur. Le clip 18 peut être à l'extérieur du conduit de guidage formé par le support 16. Ceci permet d'introduire facilement les fils à l'intérieur du clip 18. L'articulation de la patte en une de ses extrémités permet d'écarter du support l'autre extrémité de la patte 22 par déformation élastique de la patte. Cet écartement libère un logement de fixation entre la patte et le support dans lequel les fils 20 sont introduits. Lorsque les fils sont en place l'extrémité libre est relâchée et la patte 22 tend à revenir dans sa position de repos. Les fils 20 sont alors pincés contre le support 16. La fixation des fils est aisée mais n'est toutefois pas définitive. En effet, le clip peut être déformé à nouveau de sorte à pouvoir dégager les fils du logement de fixation entre le clip 18 et le support 16.

Selon la figure 2, la patte 22 a une première concavité 24 orientée vers le support 16. La patte 22 est alors bombée et le logement entre la patte 22 et le support 16 est agrandi. Ceci permet de fixer un plus grand nombre de fils. La patte 22 peut en outre avoir, à proximité de son extrémité libre, une deuxième concavité 26 orientée dans une direction contraire à celle de la première concavité 24. La deuxième concavité 26 permet de tenir écartée l'extrémité libre de la patte 22 du support 16. L'avantage de la deuxième concavité 26 est de permettre de facilement introduire les fils 20 dans le clip 18. Pour cela, les fils 20 sont plaqués contre le support 16 à proximité de l'extrémité libre de la patte 22 et translatés en direction du clip 18. Lorsque les fils 20 rentrent en contact avec l'extrémité libre, celle-ci se soulève par déformation élastique de la patte. Les fils 20 peuvent être alors translatés plus au fond du clip 18. Entre les deux concavités 24, 26, la patte 22 se rapproche du support 16 de sorte à restreindre l'accès à la première concavité. Ceci permet d'éviter que les fils introduits dans la concavité en ressortent. De préférence, la patte 22, entre les deux concavités 24, 26, est en contact avec le support 16. Ceci permet d'empêcher encore mieux que les fils 20 ressortent du clip 18, notamment lorsque le véhicule roule.

La patte 22 peut être obtenue par découpe de la paroi même du support 16, sous forme de fenêtre. Trois des côtés de la patte 22 sont découpés dans la paroi du support 16, le quatrième côté étant l'extrémité en laquelle la patte 22 est articulée sur le support 16. Ce mode de réalisation permet de simplifier l'étape de moulage au cours de laquelle le support sans aspérité est moulé, et de pouvoir découper des clips 18 le long du support 16 en des endroits déterminés lors de la fixation des fils 20 sur le support 16.

La figure 3 montre une section du support 16 selon un mode de réalisation de l'invention. Dans le mode de réalisation de l'invention, le clip 18 comporte en outre une autre patte 23 articulée par une de ses extrémités sur le support 16. La patte 23 coopère avec la patte 22 pour fixer les fils 20 le long du tube. La patte 23 est articulée sur le support 16 de sorte à former un logement dont l'ouverture est tournée vers la patte 22. L'extrémité libre de la patte 23 est dirigée vers la patte 22. Sur la figure 3, la patte 23 a son extrémité libre en contact avec la patte 22. Les pattes 22, 23 forment avec le support 16 un logement de fixation des fils 20. L'introduction des fils 20 est effectuée en pressant les fils contre la patte 23 de sorte qu'elle fléchisse élastiquement en direction de l'intérieur du logement de fixation. Les fils sont ensuite translatés en direction de la patte 22. Ce mouvement libère la patte 23 qui retrouve sa position de repos en contact avec la patte 22. Les fils 20 sont alors fixés à l'intérieur du logement de fixation. La fixation se produit, par exemple, de la façon suivante : les fils sont maintenus en place par pincement par la patte 22 ; si lors du transport, par exemple lorsque le véhicule roule, les fils se dégagent de la patte 22 en raison de vibrations, les fils sont retenus dans le logement par la patte 23 en contact avec la patte 22. Ce mode de réalisation permet d'introduire facilement les fils 20 dans le logement, sans qu'ils se libèrent d'eux-mêmes. Toutefois, les fils 20 peuvent être retirés du logement de fixation par une action manuelle sur l'une des pattes 22, 23.

Avantageusement, les pattes 22, 23 peuvent avoir leur extrémité libre en contact. Cette variante présente en plus l'avantage d'être de fabrication simplifiée. Les pattes peuvent être obtenues lors de l'étape de moulage, mais aussi par découpe de la paroi du support 16.

Avantageusement, le support selon l'invention a une pluralité de clips 18 de fixation. Les clips 18 sont répartis le long du support 16. Le choix du nombre et de l'emplacement des clips 18 est défini selon le nombre de fils et de leur utilité. La pluralité de clips 18 permet de répartir la fixation des fils le long du support 16 et d'assurer ainsi une meilleure fixation des fils sur le support.

Le support de rails de lève-vitre selon l'invention peut être installé de manière connue dans une porte 1 de véhicule, tel qu'une voiture, un camion, un car,... Cette porte comprend des périphériques dont les fils électriques sont fixés par le clip. Le support 16 peut être rapporté et fixé sur la porte 1 de manière modulaire, c'est-à-dire que le support peut être fabriqué avec un (des) clip(s) puis fixé aux rails avant d'être monté sur la porte. Il n'est alors pas nécessaire de rajouter un clip de fixation. Selon le mode de fabrication dans lequel le clip comprend deux pattes découpées dans la paroi du support, il est alors possible de définir le nombre et l'emplacement des clips en fonction des fils présents dans la porte.

Avantageusement, le support peut en outre supporter les périphériques montés sur la porte. Il est ainsi possible de fixer la poignée de porte, les haut-parleurs, la serrure,... sur le support. Les périphériques alimentés électriquement ont leurs fils d'alimentation fixés sur le support par l'intermédiaire du clip.

Le support peut présenter un clip réalisé sous forme de plaque. Le clip est alors articulé sur le support 16 selon sa longueur. L'homme du métier déterminera les dimensions de la plaque en fonction de nombre de fils et de leur utilité. Cette forme de clip présente les mêmes avantages que précédemment ; cette forme permet en plus de maintenir les fils selon une longueur plus importante et d'en améliorer encore la fixation.

## Revendications

1. Support (16) de rails de lève-vitre comprenant au moins un clip (18) de fixation d'au moins un fil (20), **caractérisé en ce que** le clip (18) est monobloc avec le support (16) et comporte deux pattes (22, 23) articulées par une de leurs extrémités sur le support (16), une des pattes (22) ayant son extrémité libre en contact avec l'autre patte (23).

2. Support selon la revendication 1, **caractérisé en ce que** les pattes (22, 23) ont leur extrémité libre en contact.

3. Support selon l'une des revendications précédentes, **caractérisé en ce qu'**il a une section transversale en forme de conduit de guidage.

4. Lève-vitre comprenant :
- un support (16) selon l'une des revendications 1 à 3, et
- deux rails (12, 14) reliés entre eux par le support (16).

5. Lève-vitre selon la revendication 4, **caractérisé en ce que** l'extrémité inférieure de chacun des rails (12, 14) est reliée par le support (16) à l'extrémité supérieure de l'autre rail.

6. Lève-vitre selon la revendication 5, **caractérisé en ce qu'**il comprend en outre un câble coulissant dans les rails et dans le support (16).

7. Porte de véhicule automobile comprenant un lève-vitre selon l'une des revendications 4 à 6.

8. Porte selon la revendication 7, **caractérisé en ce qu'**elle comprend des périphériques dont les fils (20) électriques sont fixés par le clip (18).

9. Procédé de fabrication d'un support selon l'une des revendications 1 à 3, le procédé comprenant une étape de moulage du support.

## Patentansprüche

1. Träger (16) für die Schienen eines Fensterhebers mit mindestens einem Clip (18) zur Befestigung mindestens eines Kabels (20), **dadurch gekennzeichnet, dass** der Clip (18) mit dem Träger (16) einstückig ausgebildet ist und zwei Laschen (22, 23) aufweist, die an einem ihrer Enden am Träger (16) angelenkt sind, wobei eine (22) der Laschen mit ihrem freien Ende die andere Lasche (23) berührt.

2. Träger nach Anspruch 1, **dadurch gekennzeichnet, dass** sich die freien Enden der Laschen (22, 23) berühren.

3. Träger nach einem der vorhergehenden Ansprüche, **dadurch gekennzeichnet, dass** er einen Querschnitt in Form eines Führungskanals aufweist.

4. Fensterheber aufweisend:
- einen Träger (16) nach einem der Ansprüche 1 bis 3, und
- zwei Schienen (12, 14), die durch den Träger (16) miteinander verbunden sind.

5. Fensterheber nach Anspruch 4, **dadurch gekennzeichnet, dass** das untere Ende jeder Schiene (12, 14) durch den Träger (16) mit dem oberen Ende der anderen Schiene verbunden ist.

6. Fensterheber nach Anspruch 5, **dadurch gekennzeichnet, dass** er ferner ein Kabel aufweist, das in den Schienen und im Träger (16) gleitet.

7. Kraftfahrzeugtür, die einen Fensterheber nach einem der Ansprüche 4 bis 6 aufweist.

8. Tür nach Anspruch 7, **dadurch gekennzeichnet, dass** sie Peripheriegeräte aufweist, deren elektrische Kabel (20) durch den Clip (18) befestigt sind.

9. Verfahren zur Herstellung eines Träger nach einem der Ansprüche 1 bis 3, wobei das Verfahren einen Schritt umfasst, bei dem der Träger geformt wird.

## Claims

1. A window regulator rail support (16) comprising at least one securing clip (18) for at least one lead (20), **characterised in that** said clip (18) is integral with said support (16) and includes two arms (22, 23) hinged at one of their ends on said support (16), one of said arms (22) having its free end in contact with the other arm (23).

2. The support according to claim 1, **characterised in that** the arms (22, 23) have their free end in contact.

3. The support according to one of the preceding claims, **characterised in that** it has a cross section in the shape of a guiding conduit.

4. A window regulator comprising:
- a support (16) according to one of claims 1 to 3, and
- two rails (12, 14) connected together by said support (16).

5. The window regulator according to claim 4, **characterised in that** the lower end of each one of said rails (12, 14) links the support (16) to the top end of the other rail.

6. The window regulator according to claim 5, **characterised in that** it further comprises a cable sliding in the rails and in the support (16).

7. An automobile vehicle door comprising a window regulator according to one of claims 4-6.

8. The vehicle door according to claim 7, **characterised in that** it comprises peripherals the electric leads (20) of which are secured by the clip (18).

9. A method of producing a support according to one of Claims 1-3, the method comprising a step of molding the support.
